# DEMANDE DE BREVET EUROPEEN

(11) **EP 4 556 631 A1**
(43) Date de publication de la demande: **21.05.2025**
(21) Numéro de dépôt: 23210901.7
(22) Date de dépôt: 20.11.2023
(51) Int. Cl.: E01H 1/12, A01D 7/00

(54) **DISPOSITIF DE RAMASSE-FEUILLE**

(71) Demandeur: Bietrix, Robert, 34540 Balaruc-Le-Vieux (FR)
(72) Inventeur: Bietrix, Robert, 34540 Balaruc-Le-Vieux (FR)
(74) Mandataire: Tzeuton Tchangoum, Eric Olivier

(57) **Abrégé**

L'invention concerne un dispositif de ramasse-feuille comprenant :
- un manche (3) portant un premier ramasse-feuille (19) et un deuxième ramasse-feuille (17), montés rotatifs l'un par rapport à l'autre entre une position fermée dans laquelle les ramasse-feuilles (17, 19) sont disposés l'un contre l'autre de sorte à réaliser une préhension d'objet (2), et une position ouverte dans laquelle les ramasse-feuilles (17, 19) sont éloignés l'un de l'autre ;
- une bague (5) coulissant relativement au manche (3) ;
- une bielle (15) fixée à la bague (5) et à un des ramasse-feuilles (17) du côté bas de sorte qu'en coulissant la bague (5) vers le haut, la bielle (15) tire ledit ramasse-feuille (17) vers le haut vers la position ouverte, et inversement,
caractérisé par
- un moyen de verrouillage (5a) actionnable pour verrouiller le coulissage de la bague (5) relativement au manche (3).

## Description

La présente invention se rapporte au domaine des dispositifs de jardinage, en particulier des dispositifs de ramasse-feuille.

Dans ce domaine, on connaît des râteaux et dispositifs ramasse-feuilles pour rassembler des feuilles mortes. Une fois les feuilles mortes amoncelées, il est nécessaire d'utiliser deux ramasse-feuilles avec leurs mats l'un contre l'autre pour pouvoir jeter les feuilles mortes au rebus.

La demande FR3103675 propose un dispositif ramasse-feuilles comportant deux ramasse-feuilles montés rotatifs sur un manche avec une bague à actionner pour ouvrir ou fermer les ramasse-feuilles.

Lors du stockage de ce type de dispositif par des professionnels dans une boîte ou une camionnette, dans un objectif de gain d'espace, le dispositif ramasse-feuilles est rangé en position inverse à la position d'utilisation, c'est-à-dire avec le ramasse-feuilles vers le haut.

Dans ce cas, le poids des ramasse-feuilles les entraîne vers le manche de sorte qu'ils s'ouvrent et se gênent les uns les autres. Ils sont susceptibles de s'entremêler, voire de se détériorer les uns les autres.

Ainsi, l'objectif de la présente invention est de remédier aux défauts de l'art antérieur, et notamment de proposer une solution limitant les réouvertures des dispositifs à plusieurs ramasse-feuilles lors de leur stockage tête bêche.

Pour atteindre cet objectif, l'invention propose un dispositif de ramasse-feuille présentant un côté haut et un côté bas, le dispositif de ramasse-feuille comprenant :
- un manche portant un premier ramasse-feuille et un deuxième ramasse-feuille à une extrémité basse du manche, le premier ramasse-feuille et le deuxième ramasse-feuille étant montés rotatifs l'un par rapport à l'autre entre une position fermée dans laquelle les ramasse-feuilles sont disposés l'un contre l'autre de sorte à réaliser une préhension d'objet, et une position ouverte dans laquelle les ramasse-feuilles sont éloignés l'un de l'autre ;
- une bague disposée autour du manche, coulissant relativement au manche ;
- une bielle fixée à la bague du côté haut de la bielle, et à un des ramasse-feuilles du côté bas de la bielle de sorte qu'en coulissant la bague vers le haut, la bielle tire ledit ramasse-feuille vers le haut vers la position ouverte, et qu'en coulissant la bague vers le bas, la bielle pousse ledit ramasse-feuille vers le bas vers la position fermée,
   caractérisé par
- un moyen de verrouillage actionnable pour verrouiller le coulissage de la bague relativement au manche.

Par « dispositif de ramasse-feuille » est entendu tout outil denté avec un manche allongé, tel qu'un râteau ou autres, permettant de ramasser au moins une feuille. Par « ramasse-feuille » est entendu une extrémité basse de dispositif ramasse feuille sans le manche.

Avantageusement, le moyen de verrouillage permet de verrouiller les ramasses feuilles en position fermée de sorte qu'ils ne se réouvrent pas lorsque le dispositif de ramasse-feuille est stocké tête bêche.

Selon une variante, la bague comporte le moyen de verrouillage.

Cela permet de simplifier le verrouillage en bloquant le déplacement de la bague.

Selon une variante, le moyen de verrouillage comprend un levier équipé d'une came de blocage.

Cela permet de réaliser un verrouillage mécanique par un blocage en force de la came sur le manche.

Selon une variante, le moyen de verrouillage est disposé du côté haut de la bague.

Cela permet de laisser de la place sur le côté bas de la bague pour fixer la bielle.

Selon une variante, la bielle comprend des oeillets de fixation pour fixer la bague et ledit ramasse-feuille, à plusieurs écartements longitudinaux.

Cela permet d'adapter l'intervalle entre les ramasse feuille et la bague pour correspondre à plusieurs tailles d'utilisateurs.

Selon une variante, la bielle comprend des sections sécables comportant chacune un oeillet de fixation.

Cela permet de découper les excédents de bielle lorsqu'une petite taille de bielle correspond à la taille de l'utilisateur.

L'invention sera davantage détaillée par la description de modes de réalisation non limitatifs, et sur la base des figures annexées illustrant des modes de réalisation préférés de l'invention, dans lesquelles :

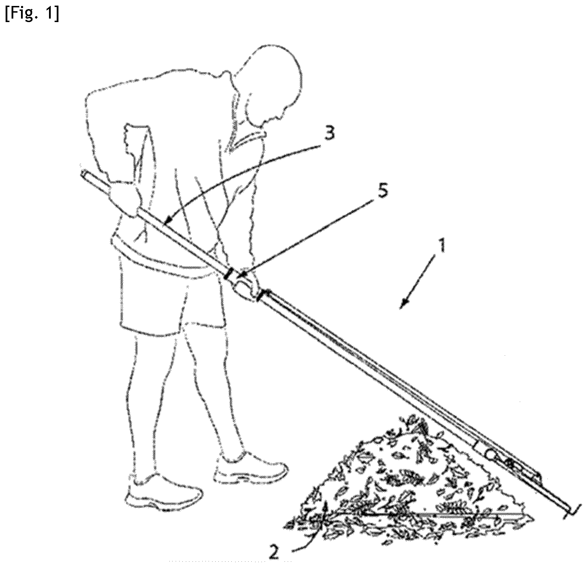

- [Fig.1] illustre schématiquement un utilisateur utilisant un dispositif de ramasse feuille selon l'art antérieur ;
- [Fig. 2] illustre schématiquement une vue de face d'une bague d'un dispositif de ramasse feuille selon une variante préférée de l'invention, dans deux positions d'actionnement du moyen de verrouillage ; et
- [Fig. 3] représente une vue de face d'une bielle d'un dispositif de ramasse feuille selon une variante préférée.

En référence à ces figures, le dispositif de ramasse-feuilles décrit dans une orientation présentant un côté haut et un côté bas suivant l'axe longitudinal dudit dispositif.

Le dispositif de ramasse-feuilles comprend un manche 3 portant un premier ramasse-feuille 19 et un deuxième ramasse-feuille 17 à une extrémité basse du manche 3.

Le premier ramasse-feuille 19 et le deuxième ramasse-feuille 17 sont montés rotatifs l'un par rapport à l'autre. Ils sont mobiles l'un par rapport à l'autre entre une position fermée et une position ouverte.

Dans la position fermée, les ramasse-feuilles 17, 19 sont disposés l'un contre l'autre de sorte à réaliser une préhension d'objets 2, telles que des feuilles, des ordures ou des objets quelconques. Dans la position ouverte, les ramasse-feuilles 17, 19 sont éloignés l'un de l'autre.

De préférence, le premier ramasse-feuilles 19 est fixé au manche 3, et le deuxième ramasse-feuilles 17 est monté rotatif sur le premier ramasse-feuilles 19.

Le dispositif ramasse-feuilles comprend en outre une bague 5 disposée autour du manche 3, coulissant relativement au manche 3. Cette bague 5 forme une poignée de préhension du dispositif ramasse-feuilles.

Le dispositif ramasse-feuilles comprend en outre une bielle 15 fixée à la bague 5 du côté haut de la bielle 15, et à un des ramasse-feuilles, en particulier le deuxième ramasse-feuilles 17, du côté bas de la bielle 15.

En coulissant la bague 5 vers le haut, la bielle 15 tire ledit ramasse-feuille 17 vers le haut vers la position ouverte, et en coulissant la bague 5 vers le bas, la bielle 15 pousse ledit ramasse-feuille 17 vers le bas vers la position fermée.

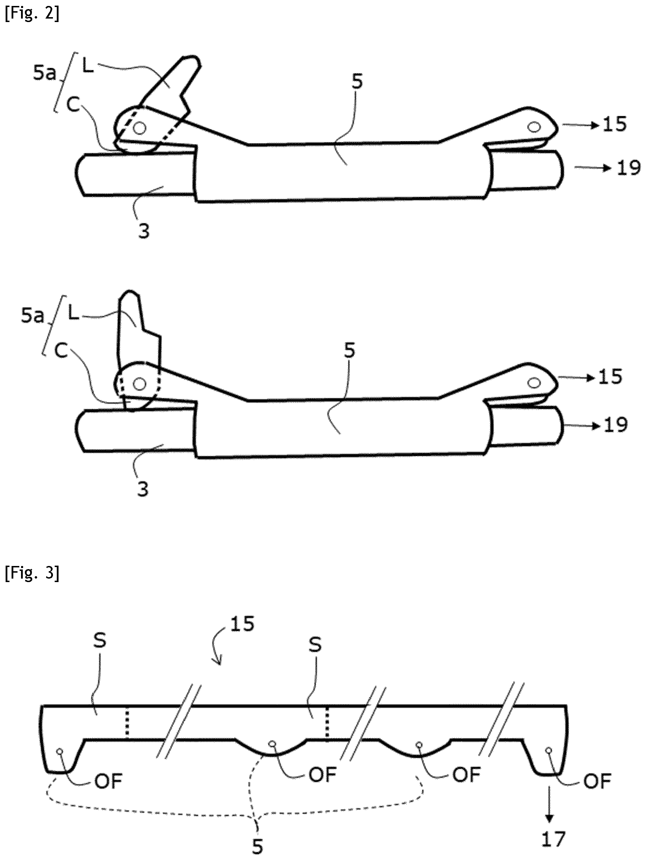

Selon l'invention, le dispositif ramasse-feuilles comprend en outre un moyen de verrouillage 5a actionnable pour verrouiller le coulissage de la bague 5 relativement au manche 3. En particulier, le moyen de verrouillage 5a est disposé sur la bague comme l'illustre la figure 2.

Dans la variante préférée, le moyen de verrouillage 5a comprend un levier L équipé d'une came de blocage C. Lorsque le levier L est pivoté, la came C vient en appui contre le manche 3 et bloque les coulissements de la bague 5 par rapport au manche 3.

De préférence, le moyen de verrouillage 5a est disposé du côté haut de la bague 5.

Par ailleurs, selon l'invention, la bielle 15 comprend des oeillets de fixation OF pour fixer la bague 5 et ledit ramasse-feuille 17, à plusieurs écartements longitudinaux suivant la longueur de la bielle 15. De préférence, la bielle 15 comprend des sections sécables S agencées longitudinalement, comportant chacune un oeillet de fixation OF. Les sections sécables S peuvent comporter des prédécoupes pour en faciliter la coupe.

## Revendications

1. Dispositif de ramasse-feuille présentant un côté haut et un côté bas, le dispositif de ramasse-feuille comprenant :
- un manche (3) portant un premier ramasse-feuille (19) et un deuxième ramasse-feuille (17) à une extrémité basse du manche (3), le premier ramasse-feuille (19) et le deuxième ramasse-feuille (17) étant montés rotatifs l'un par rapport à l'autre entre une position fermée dans laquelle les ramasse-feuilles (17, 19) sont disposés l'un contre l'autre de sorte à réaliser une préhension d'objet (2), et une position ouverte dans laquelle les ramasse-feuilles (17, 19) sont éloignés l'un de l'autre ;
- une bague (5) disposée autour du manche (3), coulissant relativement au manche (3) ;
- une bielle (15) fixée à la bague (5) du côté haut de la bielle (15), et à un des ramasse-feuilles (17) du côté bas de la bielle (15) de sorte qu'en coulissant la bague (5) vers le haut, la bielle (15) tire ledit ramasse-feuille (17) vers le haut vers la position ouverte, et qu'en coulissant la bague (5) vers le bas, la bielle (15) pousse ledit ramasse-feuille (17) vers le bas vers la position fermée,
**caractérisé par**
- un moyen de verrouillage (5a) actionnable pour verrouiller le coulissage de la bague (5) relativement au manche (3).

2. Dispositif de ramasse-feuille selon la revendication précédente, **caractérisé en ce que** la bague (5) comporte le moyen de verrouillage (5a).

3. Dispositif de ramasse-feuille selon l'une des revendications précédentes, **caractérisé en ce que** le moyen de verrouillage (5a) comprend un levier (L) équipé d'une came de blocage (C).

4. Dispositif de ramasse-feuille selon l'une des revendications précédentes, **caractérisé en ce que** le moyen de verrouillage (5a) est disposé du côté haut de la bague (5).

5. Dispositif de ramasse-feuille selon l'une des revendications précédentes, dans lequel la bielle (15) comprend des oeillets de fixation (OF) pour fixer la bague (5) et ledit ramasse-feuille (17), à plusieurs écartements longitudinaux.

6. Dispositif de ramasse-feuille selon la revendication précédente, dans lequel la bielle (15) comprend des sections sécables (S) comportant chacune un oeillet de fixation (OF).
